# NEUE EUROPÄISCHE PATENTSCHRIFT

(11) **EP 1 362 743 B2**
(45) Veröffentlichungstag und Bekanntmachung des Hinweises auf die Entscheidung über den Einspruch: **20.11.2013**
(45) Hinweis auf die Patenterteilung: 16.12.2009
(21) Anmeldenummer: 03010993.8
(22) Anmeldetag: 16.05.2003
(51) Int. Cl.: B60R 9/04

(54) **Dachträgersystem für ein Fahrzeug, Verfahren zur Herstellung des Dachträgersystems und Fahrzeug mit einem Dachträgersystem**
Roof carrier system for a vehicle, method of manufacturing the roof carrier system and vehicle with a roof carrier system
Système de galerie de toit pour véhicule, procédé de réalisation d'un système de galerie de toit pour véhicule et véhicule comportant un système de galerie de toit

(30) Priorität: 17.05.2002 DE 10221943
(43) Veröffentlichungstag der Anmeldung: 19.11.2003
(73) Patentinhaber: Süddeutsche Aluminium Manufaktur GmbH, 89558 Böhmenkirch (DE)
(72) Erfinder: Binder, Hans, 89558 Böhmenkirch (DE); Binder, Ottmar, 89558 Böhmenkirch (DE); Schabel, Wolfgang, 73113 Ottenbach (DE); Frick, Michael, 73733 Esslingen (DE)
(74) Vertreter: Grosse, Rainer

(56) Entgegenhaltungen:
- EP-A- 0 645 282
- EP-A- 1 092 591
- EP-A- 1 199 221
- EP-B1- 0 723 506
- WO-A-99/11398
- WO-A1-91//19627
- DE-A- 3 402 516
- DE-A- 4 320 762
- DE-A- 19 726 912
- DE-A1- 4 223 898
- DE-C1- 4 422 421
- DE-U- 20 120 319
- DE-U1- 20 207 754
- JP-A- H 106 865
- Abbildungen einer seitlichen Dachvolumenleiste eines BMW 3er Coupés
- ERBSLÖH AG: 'Neue Schiebedachkonstruktionen' EA PROFIL 1995,

## Beschreibung

Die Erfindung betrifft ein Verfahren zur Herstellung eines Dachträgersystems für ein Fahrzeug, insbesondere für einen Personenkraftwagen.

Personenkraftwagen können auf ihrem Dach ein Dachträgersystem in Form einer Dachreling, die aus zwei, parallel zueinander angeordneten Dachschienen bestehen, besitzen. Diese Dachschienen können einoder mehrteilig gestaltet sein. Dachschienen, welche drei- oder mehrteilig gestaltet sind, weisen mindestens ein Mittelteil sowie zwei mit dem Mittelteil zusammengesteckte Endteile auf. Die beiden Endteile sind mit einen Abstand zur Dachfläche des Fahrzeugs erzeugenden Fußstreben versehen. Eine entsprechende Fußstrebe ist im mittleren Bereich des Mittelteils angeordnet. Die bekannte Dachreling hat sich bewährt und gibt dem Fahrzeug ein charakteristisches Aussehen.

Eine mehrstückige, gattungsbildende Dachleiste ist z.B. aus der EP-A-1 199 221 bekannt.

Die Erfindung befasst sich mit einer neuartigen Verfahren zur Herstellung eines Dachträgersystems mit dem ein besonderer, optischer Effekt einhergeht.

Erfindungsgemäß ist ein Verfahren zur Herstellung eines Dachträgersystems mit mindestens einer Dachleiste gemäß Anspruch 1 vorgesehen. Durch die speziell ausgebildete Anlagefläche der fußstrebenfreien Konstruktion überragt die Dachleiste das Fahrzeugdach nur etwa in Höhe der Leistendicke bei hochgenauem Passsitz zur Fahrzeugkarosseriekontur, insbesondere zu den Seitenwandrahmen des Kraftfahrzeugs, auf denen die Dachleisten montierbar sind. Die hohe Genauigkeit resultiert aus der angepassten Anlagefläche, das heißt, diese ist derart gestaltet, dass sie der Fahrzeugkarosseriekontur entspricht und demzufolge zu einer gleichmäßigen Randspaltausbildung zwischen Dachleiste und Fahrzeugkarosserie führt, so dass keine Abdeckmittel, wie zum Beispiel Einfassgummis oder dergleichen eingesetzt werden müssen. Durch die Erfindung ist es vielmehr möglich, direkt auf dem Fahrzeugdach und dieses nur wenig überragende Dachleisten anzuordnen, die ferner zu ebenmäßigen und daher optisch sehr ansprechenden Randspalten führen. Durch das Anpassen der Anlagefläche an die Fahrzeugkarosseriekontur werden stets bei der Herstellung auftretende Toleranzen ausgeglichen. Diese Toleranzen betreffen die Konturierung der Dachschiene, die ihre Formgebung erfindungsgemäß durch einen Biegevorgang erhält. Da die Biegung aufgrund unterschiedlicher Einflussparameter jedoch nicht mit reproduzierbarer Genauigkeit möglich ist und daher Abweichungen unumgänglich sind, sorgt die angepasste Anlagefläche für einen optimalen Sitz, so dass Kaschiermaßnahmen, wie beispielsweise die erwähnten Gummieinfassungen oder Kunststoffeinfassungen, entfallen können.

Die erfindungsgemäße Nachbearbeitung ist eine nach der Biegung der Dachleiste erfolgende spanabhebende Bearbeitung an der Dachleiste, um der durch die Biegung erzeugten der Fahrzeugkarossseriekontur nur angenäherten Kontur die tatsächliche Fahrzeugkarosseriekontur zu geben. Im Zuge der Fertigung werden -je nach Biegeergebnis- Abtragungsmaßnahmen des Schienenmaterials in unterschiedlichem Umfang bei verschiedenen Schienen stattfinden, obwohl die Schienen in ein und derselben Biegemaschine unter gleichen Bedingungen gebogen wurden. Diese Streuung in der Biegekontur ist selbst bei sorgfältigster Bearbeitung nicht zu vermeiden und werden daher erfindungsgemäß in vorstehender Weise korrigiert.

Die erwähnte gleichmäßige Randspaltausbildung kann derart getroffen sein, dass insbesondere die äußere, der Fahrzeugkarosserie zugeordnete Randkante direkt auf dem Fahrzeugdach aufliegt, also eine Spaltbreite des Maßes Null vorliegt. Dies ungeachtet der Möglichkeit, dass unter der Dachleiste, also auf dem Fahrzeugdach, eine vorzugsweise dünne, durchsichtige Scheuerleiste (Klarsicht-Kunststofffolie) aufgeklebt ist, um einen Lackschutz zu gewährleisten. Alternativ zu dem Spaltmaß Null kann jedoch auch ein Minimal-Spalt vorgesehen sein. Der Minimal-Spalt oder auch ein großer Spalt kann mit den Merkmalen einhergehen, dass die Anlagefläche derart ausgestaltet und angeordnet ist, dass zumindest die äußere, der Fahrzeugkarosserie zugeordnete Randkante der Dachleiste mit der Fahrzeugkarosserie, also mit dem Fahrzeugdach, eine Schattenfuge bildet. Zur Erzeugung der Schattenfuge ist ein Abstand der Randkante der Dachleiste zur Fahrzeugkarosserie erforderlich, der aufgrund der Erfindung an jeder Stelle gleich groß oder nahezu gleich groß ist. Trotz Schattenfuge kann optional die als Scheuerleiste dienende Klarsicht-Kunststofffolie vorgesehen sein.

Die erwähnte Schattenfuge lässt sich vorzugsweise dadurch erzeugen, dass die Anlagefläche an mindestens einem Auflagesteg ausgebildet ist. An ihrer, der Fahrzeugkarosserie zugekehrten Seite weist die Dachleiste demgemäss den mindestens einen Auflagesteg insbesondere einstückig auf, der insbesondere schmaler als die Leiste ist und demzufolge nicht bis zur Randkante der Dachleiste reicht, sondern zurückgesetzt liegt. Dies kann auf der äußeren und alternativ oder zusätzlich auch auf der inneren Seite der Dachleiste der Fall sein, wobei unter äußerer Kante die Randkante zu verstehen ist, die ein neben dem Fahrzeug stehender Passant sieht. Die innenliegende, also mehr zur Fahrzeuglängsmitte orientierte Randkante der Dachleiste kann ebenfalls mit gleichmäßiger Randspaltausbildung und/oder Schattenfuge ausgebildet sein, ist jedoch von einem Passanten aufgrund ihrer Lage nicht unmittelbar einsichtig. Der gegenüber der Randkante der Dachleiste rückgesetzte Auflagesteg erzeugt einen optischen Schwebeeffekt der Dachleiste, da nicht unmittelbar erkennbar ist, wie sie auf dem Fahrzeugdach gehalten wird. Insbesondere können mehrere Auflagestege vorgesehen sein, beispielsweise parallel zueinanderliegende, in Längsrichtung der Leiste verlaufende, relativ dünnwandige Stege.

Als Material für die Dachleiste kommen insbesondere Aluminium, Magnesium, Stahl und/oder Messing, sowie deren Legierungen in Frage, wobei der Einsatz von Aluminium bevorzugt ist und daher die Möglichkeit gegeben wird, die Oberfläche nach dem Polieren zu eloxieren. Alternativ kann jedoch auch -unabhängig vom eingesetzten Material- eine Oberflächenbeschichtung, insbesondere eine Pulver- beziehungsweise Lackierbeschichtung oder eine Verchromung, vorgenommen werden.

Die Dachleiste ist einstückig ausgebildet, das heißt, unabhängig von möglichen Befestigungsmitteln liegt eine einstückige Ausgestaltung vor, die das Mittelteil und auch die Stirnteile umfasst. Alternativ ist eine mehrstückige Ausbildung vorgesehen, die ein Mittelteil und zwei mit dem Mittelteil verbindbare Stirnteile aufweist. Mithin liegt eine dreiteilige Struktur vor, wobei das Mittelteil als Strangpress-Hohlprofil ausgestaltet ist und die Stirnteile als Schmiedeteile, insbesondere bei der Herstellung aus Aluminium, gefertigt werden können. Alternativ können die Stirnteile auch als gefräste oder beschnittene Profilstücke ausgebildet sein. Erfolgt eine Oberflächenbeschichtung, so ist es auch möglich, die Stirnteile als Spritzgussteile herzustellen. Soll eine Eloxierung einer aus Aluminium bestehenden Dachleiste vorgenommen werden, so besteht das Mittelteil aus Aluminiumrohr und die Stirnteile sind als Aluminiumschmiedeteile gefertigt.

Weitere Vorteile der Erfindung ergeben sich aus den Unteransprüchen.

Die Zeichnungen veranschaulichen die Erfindung anhand von Ausführungsbeispielen, und zwar zeigt:
- Figur 1: ein als Dachleiste ausgebildetes Dachträgersystem in dreiteiliger Form und Explosionsdarstellung,
- Figur 2: einen Querschnitt durch ein Stirnteil der Dachleiste gemäß Figur 1,
- Figur 3: einen Längsschnitt durch eines der Stirnteile und einen Abschnitt des Mittelteils der Dachleiste der Figur 1,
- Figur 4: einen Längsschnitt durch das Mittelteil der Dachleiste im Bereich eines Befestigungselements,
- Figur 5: einen Querschnitt durch die Dachleiste im Bereich des Befestigungselements gemäß Figur 4,
- Figur 6: einen Querschnitt durch die Dachleiste der Figur 1,
- Figur 7: einen Querschnitt durch eine Dachleiste gemäß einem anderen Ausführungsbeispiel,
- Figur 8: ein weiteres Ausführungsbeispiel des Dachträgersystems mit dreiteiliger Dachleiste und zugehörigen Befestigungselementen für die Stirnteile und das Mittelteil,
- Figur 9: einen Querschnitt durch ein Stirnteil gemäß Figur 8,
- Figur 10: einen Längsschnitt durch ein Stirnteil gemäß Figur 8,
- Figur 11: einen Längsschnitt durch ein dem Mittelteil zugeordnetes Befestigungselement der Dachleiste gemäß Figur 8 und
- Figur 12: einen Querschnitt durch die Dachleiste und das Befestigungselement gemäß Figur 11.

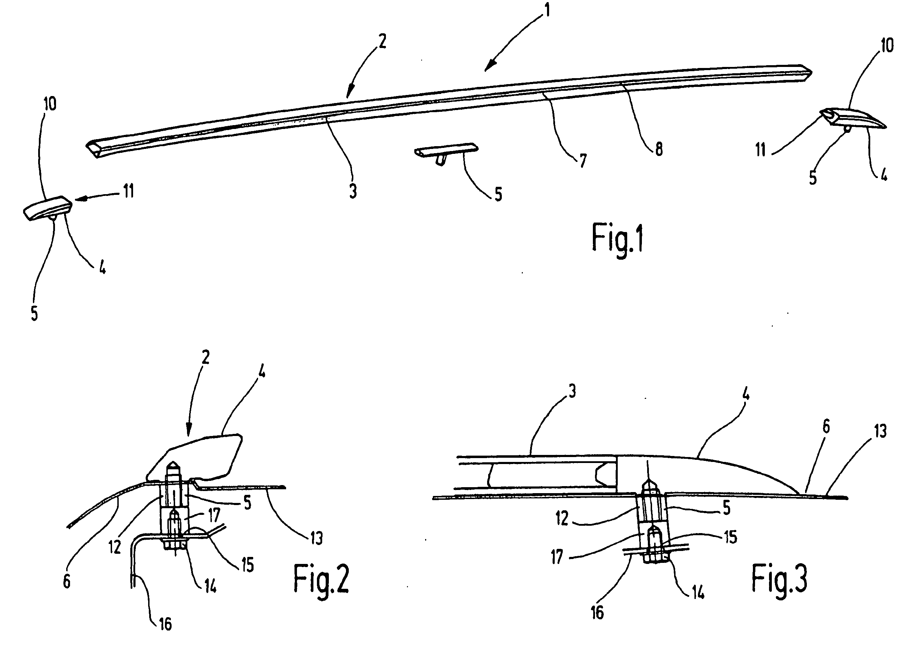

Die Figur 1 zeigt ein Dachträgersystem 1 für das Dach eines Kraftfahrzeugs. Das Dachträgersystem 1 weist eine Dachleiste 2 auf, die ein Mittelteil 3 sowie zwei Stirnteile 4 umfasst. Dem Mittelteil 3 ist ein separates Befestigungselement 5 zuordenbar. Bevorzugt werden zwei derartige Dachleisten 2 dem Dach eines Kraftfahrzeugs zugeordnet, vorzugsweise derart, dass jeder Seitenwandrahmen 6 des Kraftfahrzeugs jeweils eine Dachleiste 2 aufweist (Figur 2).

Das Mittelteil 3 ist als Hohlprofil 7, insbesondere Strangpressprofil 8, aus Aluminium ausgebildet. Bei den beiden Stirnteilen 4 handelt es sich um Formenden, die als Aluminium-Schmiedeteile 10 ausgebildet sind. Die beiden Aluminium-Schmiedeteile 10 weisen jeweils Einsteckstutzen 11 auf, die in das Innere des Hohlprofils 7 eingesteckt und zusätzlich durch Verkleben, Verpressen, Verschrauben, Vernuten oder Verstiften gesichert werden. Die Oberfläche des Mittelteils 3 sowie der beiden Stirnteile 4 ist poliert und eloxiert ausgebildet.

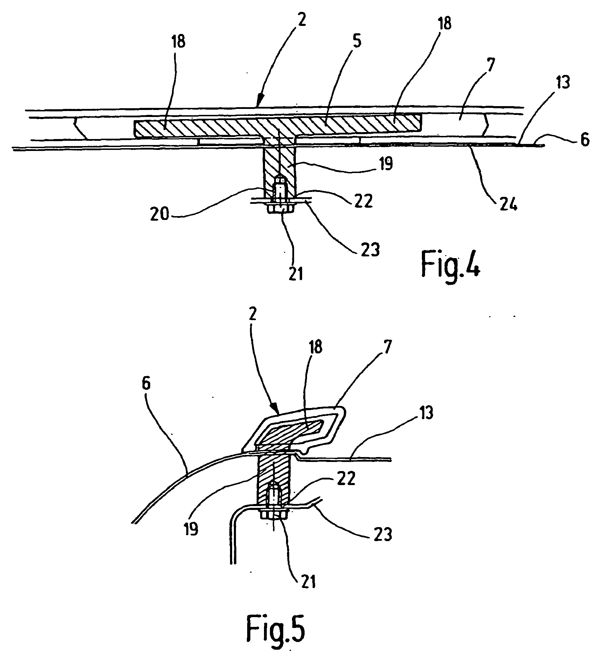

Gemäß der Figuren 2 und 3, die ein Stirnteil 4 im Querschnitt beziehungsweise im Längsschnitt zeigen, sind die beiden Stirnteile 4 ebenfalls mit Befestigungselementen 5 in Form von einstückig angeformten Gewindebuchsen 12 versehen. Zur Montage an der Fahrzeugkarosserie 13, insbesondere dem Seitenwandrahmen 6, werden vom Fahrzeuginnern her Gewindeschrauben 14 verwendet, die ein Befestigungsloch 15 eines Halteblechs 16 des Fahrzeugs durchgreifen und in ein Zwischenteil 17 eingeschraubt sind, das wiederum jeweils mit der Gewindebuchse 12 verschraubt ist. Durch Anziehen der Gewindeschrauben 14 lässt sich die Dachleiste 2 im Bereich ihrer Stirnteile 4 auf dem Fahrzeugdach festlegen. Zusätzlich ist auch das Mittelteil 3 mittels des diesem zugeordneten Befestigungselements 5 gesichert. Einzelheiten hierzu gehen aus den Figuren 4 und 5 hervor. Dort ist erkennbar, dass das T-förmig gestaltete Befestigungselement 5 mit zwei Schenkeln 18 in das Innere des Hohlprofils 7 eingreift und dort verklebt, vernutet, verpresst, verschraubt oder verstiftet ist. Ein Vertikalsteg 19 des Befestigungselements 5 weist eine Gewindebohrung 20 auf, in die eine Gewindeschraube 21 eingeschraubt ist, die ein Befestigungsloch 22 eines Halteblechs 23 des Fahrzeugs durchgreift, wodurch die Dachleiste 2 in ihrem mittleren Bereich mit ihrer Unterseite 24 fest auf die Fahrzeugkarosserie 13, insbesondere auf den Seitenwandrahmen 6 gezogen wird.

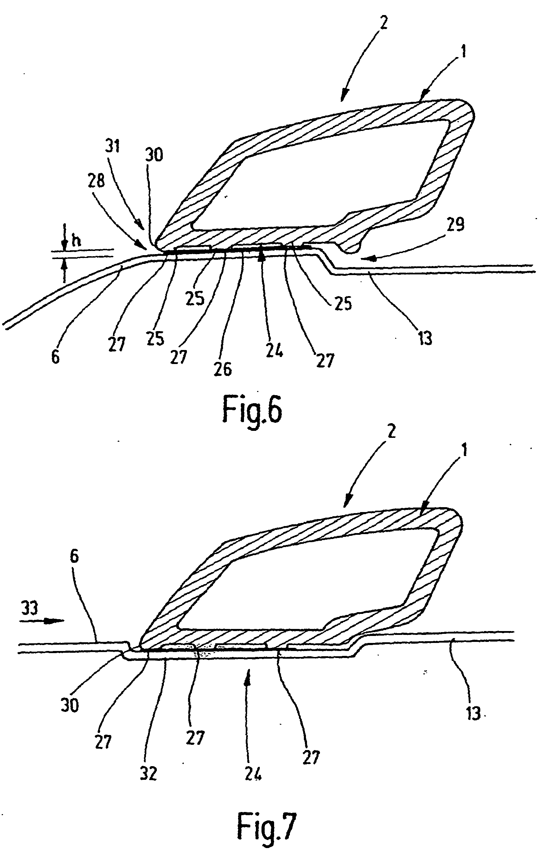

Gemäß Figur 6 sind an der Unterseite 24 der Dachleiste 2, also sowohl am Mittelteil 3 als auch an den Stirnteilen 4 Auflagestege 25 einstückig ausgebildet, die sich über die gesamte Längsausdehnung der Dachleiste 2 erstrecken. Mit den parallel beabstandet zueinander liegenden Auflagestegen 25 liegt die Dachleiste 2 auf der Fahrzeugkarosserie 13 auf, wobei als Unterlage im Bereich der Auflagestege 25 ein Scheuerschutz 26 in Form einer Klarsicht-Kunststofffolie aufgebracht sein kann. Gemäß Figur 6 liegt die Dachleiste 2 -ohne Ausbildung von Fußteilen oder dergleichen- unmittelbar auf der Fahrzeugkarosserie 13 auf, das heißt, das erfindungsgemäße Dachträgersystem 1 baut sehr niedrig und wirkt wie in das Fachzeugdach integriert. Die einzelnen Auflagestege 25 bilden an ihrer dem Fahrzeug zugekehrten Seite insgesamt eine Anlagefläche 27 aus, die über die gesamte Längserstreckung der Dachleiste verläuft und der Fahrzeugkarosseriekontur -in Längserstreckung der Dachleiste 2 gesehenangepasst ist. Diese Anpassung ist dadurch erzielt, dass nach dem Strangpressen des Mittelteils 3 dieses entsprechend der Fahrzeugkarosseriekontur gebogen oder streckgebogen wird. Die Bogenform ist wegen der Dachwölbung erforderlich und ist vom jeweiligen Fahrzeugtyp abhängig. Die Bogenkrümmung ist relativ gering, so dass diese aus der Figur 1 nicht unmittelbar hervorgeht. Erst durch Anlegen eines Lineals wird deutlich, dass das Mittelteil 3 und auch die dazugehörigen Stirnteile 4 an ihrer jeweiligen Unterseite eine leichte Krümmung aufweisen. Nach dem Biegen des Mittelteils 3 werden die beiden Stirnteile 4 mit dem Mittelteil verklebt, vernutet, verpresst, verschraubt oder verstiftet, wobei die Unterseite der Stirnteile 4 nicht durch Biegung erzeugt werden, sondern beim Schmieden dieser Teile. Zusammen mit dem zum Beispiel Einkleben der Stirnteile 4 wird auch das Befestigungselement 5 in eine entsprechende Öffnung an der Unterseite des Hohlprofils 7 eingeführt und mit dem Hohlprofil 7 verklebt. In diesem Zustand weisen die Auflagestege 25 am Mittelteil 3 und auch an den Stirnteilen 4 eine Höhe h auf, die einige mm größer ist als aus der Figur 6 ersichtlich. Da der zuvor erwähnte Biegevorgang nur mit relativ großer Toleranz durchführbar ist, muss davon ausgegangen werden, dass die Kontur der Anlagefläche über die Längserstreckung der Dachleiste 2 gesehen nicht genau mit der entsprechenden Fahrzeugkarosseriekontur übereinstimmt. Um hier Passgenauigkeit zu erzielen, wird eine Nachbehandlung vorgenommen, insbesondere eine spanabhebende Bearbeitung, derart, dass Fahrzeugkarosseriekontur und die Kontur der Anlagefläche 27, ausgebildet an den Unterseiten der Auflagestege 25, übereinstimmen, so dass die Dachleiste 2 passgenau dem Fahrzeug zugeordnet werden kann ohne dass sich -über die Länge gesehen- unterschiedliche Spaltmaße (Pfeil 28, 29) einstellen.

Die Anordnung ist vorzugsweise derart getroffen, dass die äußere Randkante 30 der Dachleiste 2 zur Fahrzeugkarosserie 13 einen gleichmäßigen Abstand, insbesondere Minimal-Spalt zur Ausbildung einer Schattenfuge 31 einhält. Für einen harmonischen und wertigen Eindruck ist dies von besonderer Bedeutung. Die zunächst eine größere Höhe als die aus der Figur 6 hervorgehende Höhe h aufweisenden Auflagestege 25 sind durch die erwähnte Nachbearbeitung (spanende Bearbeitung, insbesondere Fräsen), soweit gekürzt worden, dass die erwähnte angepasste Situation erzeugt ist. Dabei kann -über die Länge der Dachleiste 2 gesehen- je nach Biegezustand der Dachleiste 2 unterschiedlich viel Material von den Auflagestegen 25 abgetragen worden sein. Das vorstehende Vorgehen kann auch entsprechend durchgeführt werden, wenn die Dachleiste keine Auflagestege aufweist. Sie liegt dann mit ihrer unteren Wand flächig auf dem Fahrzeugdach auf. Die gegebenenfalls erfolgende Nachbearbeitung sieht dann eine spanende Bearbeitung der unteren Wand vor.

Die Figur 7 zeigt ein Ausführungsbeispiel, das im Wesentlichen dem Ausführungsbeispiel der Figur 6 entspricht, nur dass die Fahrzeugkarosserie 13 im Bereich der Unterseite 24 der Dachleiste 2 eine rinnenförmige Vertiefung 32 aufweist, die die Dachleiste 2 im Bereich ihrer Anlagefläche 27 bereichsweise aufnimmt. Blickt ein Betrachter in Richtung des Pfeils 33 auf das am Fahrzeug befestigte Dachträgersystem 1, so liegt die Anlagefläche 27 verdeckt und demzufolge ist die Randkante 30 der Dachleiste 2 dem Blick des Betrachters entzogen. Eine ungleichmäßige Spaltbildung der Dachleiste 2 über ihre Längserstreckung gegenüber der Fahrzeugkarosserie 13 ist daher kaschiert, wobei gleichwohl die erfindungsgemäße Anpassung der Anlagefläche an die Fahrzeugkarosserie durchgeführt ist und demzufolge selbst im nicht unmittelbar einsichtigen Bereich eine gleichmäßige Randspaltausbildung durchgeführt ist.

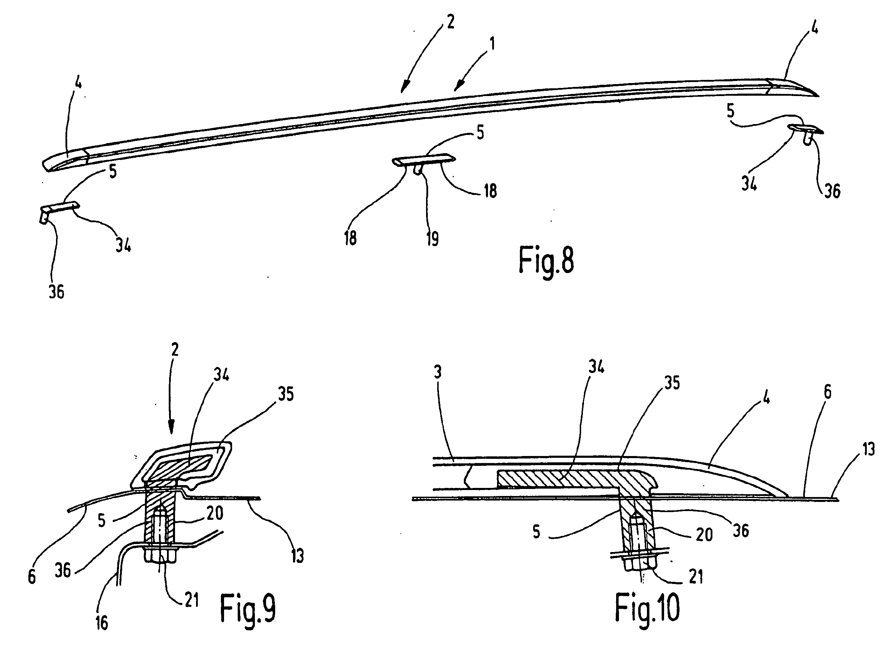

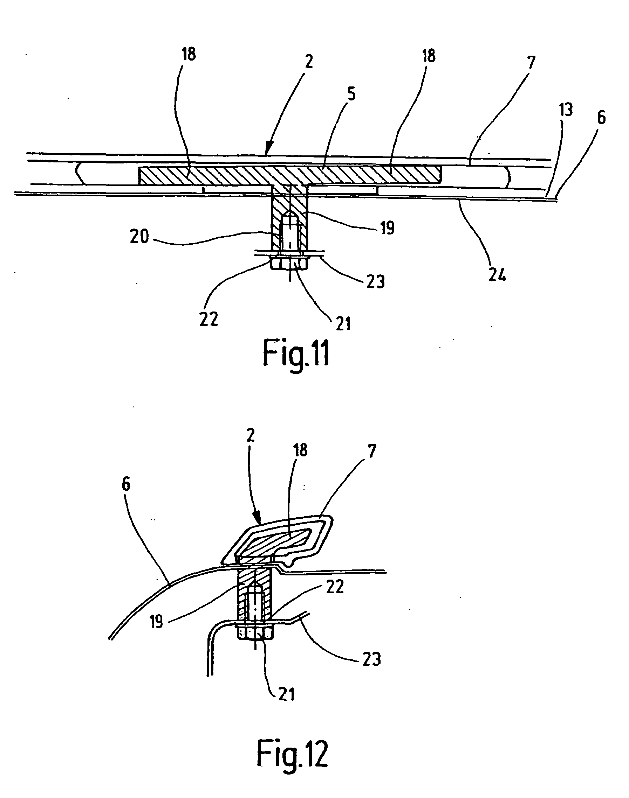

Die Figuren 8 bis 12 zeigen ein weiteres Ausführungsbeispiel einer Dachleiste 2, die ebenfalls dreiteilig ausgebildet ist. Die Figuren 8 bis 12 entsprechen weitgehend den Figuren 1 bis 5, wobei lediglich nachstehend auf die Unterschiede eingegangen werden soll. Diese bestehen darin, dass es sich bei den Stirnteilen 4 des Ausführungsbeispiels der Figuren 8 bis 12 nicht um Schmiedeteile, also Vollteile, sondern um Hohlteile handelt, die daher keine einstückig mit ihnen ausgebildeten Befestigungselemente 5 aufweisen. In die als Hohlteile ausgebildeten Stirnteile 4 werden daher L-förmige Befestigungselemente 5 eingesetzt, wobei der eine Schenkel 34 jedes Befestigungselements 5 -ebenso wie die Schenkel 18 des mittleren Befestigungselements 5- mit dem zugeordneten Hohlteil verklebt werden. Das heißt, die Schenkel 34 werden mit den entsprechenden Stirnteilen 4 verklebt. Die Schenkel 34 greifen -wie der Figur 9 zu entnehmen ist- in das Innere des jeweils hohlen Stirnteils 4 ein, wobei der Zwischenraum 35 mit Klebemasse oder mit Dehnschaummasse zum Verpressen ausgefüllt wird. Jedes der den Stirnteilen 4 zugeordneten Befestigungselemente 5 weist ferner einen Vertikalsteg 36 auf, der -entsprechend wie der Vertikalsteg 19 des mittleren Befestigungselements 5- mit Gewindebohrung 20 versehen ist, in die eine Gewindeschraube 21 eingeschraubt ist, um die Festlegung an der Fahrzeugkarosserie und damit das Aufdrücken auf das Fahrzeugdach zu gewährleisten (Figuren 9 und 10).

## Patentansprüche

1. Verfahren zur Herstellung eines Dachträgersystems (1) für ein Fahrzeug, insbesondere für einen Personenkraftwagen, mit mindestens einer Dachleiste (2), die mehrstückig mit einem als Strangpress-Hohlprofil ausgebildeten Mittelteil (3) und zwei mit dem Mittelteil (3) verbundenen Stirnteilen (4) oder einstückig als Hohlprofil (7) und Strangpressprofil (8) ausgebildet wird, wobei die Dachleiste (2) eine im Wesentlichen durchgängig auf die Fahrzeugkarosserie (13) des Fahrzeugs auflegbare, sich über die Länge der Dachleiste (2) erstreckende Anlagefläche (27) aufweist, **dadurch gekennzeichnet, dass** bei der mehrstückigen Dachleiste (2) das Mittelteil (3) oder die einstückige Dachleiste (2) zur angenäherten Anpassung an die Fahrzeugkarosseriekontur dieser entsprechend gebogen wird, dann bei der mehrstückigen Dachleiste (2) dem Mittelteil (3) die beiden Stirnteile (4) zugeordnet werden und anschließend bei der mehrstückigen sowie bei der einstückigen Dachleiste (2) die Anlagefläche (27) durch eine die Fahrzeugkarosseriekontur berücksichtigende spanende Nachbearbeitung erzeugt wird.

2. Verfahren nach Anspruch 1, **dadurch gekennzeichnet, dass** die spanende Nachbearbeitung durch Fräsen, Laserschneiden oder durch Wasserstrahlschneiden erfolgt.

3. Verfahren nach einem der vorhergehenden Ansprüche, **dadurch gekennzeichnet, dass** die Dachleiste (2) aus Aluminium hergestellt und nach der spanenden Nachbearbeitung poliert und eloxiert beziehungsweise lackierbeschichtet wird.

4. Verfahren nach einem der vorhergehenden Ansprüche, **dadurch gekennzeichnet, dass** im Bereich der Anlagefläche (27) Befestigungselemente (5) liegen, die mit der Dachleiste (2) durch Kleben, insbesondere mittels Kunststoff- beziehungsweise Metallschäumen oder mit Dehnschaummasse verpresst, verbunden werden.

5. Verfahren nach Anspruch 4, **dadurch gekennzeichnet, dass** das Kleben beziehungsweise Verpressen mittels Dehnschäume vor oder nach dem Eloxieren der aus Aluminium bestehenden Dachleiste (2) erfolgt.

6. Verfahren nach einem der vorhergehenden Ansprüche 1 bis 3, **dadurch gekennzeichnet, dass** im Bereich der Anlagefläche (27) Befestigungselemente (5) liegen, die mit der Dachleiste (2) durch Schweißen, insbesondere Laserschweißen, Aluminiumschäumen, Verpressen und/oder Verstiften verbunden werden.

7. Verfahren nach Anspruch 6, **dadurch gekennzeichnet, dass** das Verbinden vor dem Eloxieren der aus Aluminium bestehenden Dachleiste (2) erfolgt.

## Claims

1. Method of manufacturing a roof rack system (1) for a vehicle, in particular for a passenger car, comprising at least one roof rail (2), which is of a multipart construction comprising a middle part (3) in the form of an extruded hollow profile and two end parts (4) connected to the middle part (3) or is of an integral construction in the form of a hollow profile (7) and extruded profile (8), wherein the roof rail (2) has a seating face (27) that may be laid substantially continuously onto the vehicle body (13) of the vehicle and extends over the length of the roof rail (2), **characterized in that**, in case of the roof rail (2) which is of a multipart construction, the middle part (3) or the integral roof rail (2) is curved for approximate adaptation to the vehicle body contour in accordance therewith, then, in case of the roof rail (2) which is of a multipart construction, the two end parts (4) are allocated to the middle part (3) and subsequently, in case of the roof rail (2) which is of a multipart construction and in case of the roof rail (2) which is of an integral construction, the seating face (27) is produced by means of a cutting finishing operation, which takes account of the vehicle body contour.

2. Method according to claim 1, **characterized in that** the cutting finishing operation is effected by milling, laser cutting or water jet cutting.

3. Method according to one of the preceding claims, **characterized in that** the roof rail (2) is manufactured from aluminium and after the cutting finishing operation is polished and anodized and/or coated with paint.

4. Method according to one of the preceding claims, **characterized in that** fastening elements (5) are disposed in the area of the seating face (27) which are connected to the roof rail (2) by bonding, in particular by means of plastic and/or metal foaming or by press-fitting using expandable foam material.

5. Method according to claim 4, **characterized in that** the bonding and/or press-fitting by means of expandable foams is effected before or after anodizing the roof rail (2) made of aluminium.

6. Method according to one of the preceding claims 1 to 3, **characterized in that** fastening elements (5) are disposed in the area of the seating face (27) which are connected to the roof rail (2) by welding, in particular laser welding, aluminium foaming, press-fitting and/or pinning.

7. Method according to claim 6, **characterized in that** the connecting is effected before anodizing the roof rail (2) made of aluminium.

## Revendications

1. Procédé de fabrication d'un système de galerie de toit (1) pour un véhicule automobile, en particulier pour une voiture particulière, comprenant au moins une barre de toit (2) qui est réalisée en plusieurs parties avec une pièce centrale (3) réalisée sous la forme de profilé creux extrudé et deux pièces d'extrémité (4) reliées à la pièce centrale (3) ou en une seule partie sous la forme de profilé creux (7) et profilé extrudé (8), la barre de toit (2) présentant une surface d'appui (27) pouvant être appliquée essentiellement en continu sur la carrosserie (13) du véhicule, s'étendant sur la longueur de la barre de toit (2), **caractérisé en ce que** la pièce centrale (3) sur la barre de toit (2) réalisée en plusieurs parties, ou bien la barre de toit en une seule partie (2), est courbée pour s'adapter approximativement au contour de la carrosserie du véhicule conformément à celui-ci et ensuite, sur la barre de toit (2) réalisée en plusieurs parties, les deux pièces d'extrémité (4) sont attribuées à la partie centrale (3), et enfin, sur la barre de toit (2) réalisée en plusieurs parties ainsi que la barre de toit en une seule partie (2), la surface d'appui (27) est produite par un usinage postérieur par enlèvement de copeaux tenant compte du contour de la carrosserie du véhicule.

2. Procédé selon la revendication 1, **caractérisé en ce que** l'usinage postérieur par enlèvement de copeaux a lieu par fraisage, découpage au laser ou par découpage au jet d'eau.

3. Procédé selon l'une des revendications précédentes, **caractérisé en ce que** la barre de toit (2) est fabriquée en aluminium et est polie après l'usinage postérieur par enlèvement de copeaux et anodisée ou revêtue de vernis.

4. Procédé selon l'une des revendications précédentes, **caractérisé en ce qu'**au niveau de la surface d'appui (27) reposent des éléments de fixation (5) reliés à la barre de toit (2) par collage, en particulier au moyen de mousses plastiques ou de mousses métalliques, ou par injection de masse de mousse expansive.

5. Procédé selon la revendication 4, **caractérisé en ce que** le collage ou l'injection de mousses expansives a lieu avant ou après l'anodisation de la barre de toit (2) réalisée en aluminium.

6. Procédé selon l'une des revendications précédentes 1 à 3, **caractérisé en ce qu'**au niveau de la surface d'appui (27) reposent des éléments de fixation (5) reliés à la barre de toit (2) par soudage, en particulier soudage au laser, mousses d'aluminium, injection et/ou goupillage.

7. Procédé selon la revendication 6, **caractérisé en ce que** la liaison a lieu avant l'anodisation de la barre de toit (2) réalisée en aluminium.
